# EUROPEAN PATENT APPLICATION

(11) **EP 2 034 418 A1**
(43) Date of publication of application: **11.03.2009**
(21) Application number: 08163716.7
(22) Date of filing: 04.09.2008
(51) Int. Cl.: G06F 17/30

(54) **System and method for assisting a user in constructing of a search query**

(30) Priority: 06.09.2007 EP 07017515
(71) Applicant: ADVANCED DIGITAL BROADCAST S.A., 1292 Chambesy (CH)
(72) Inventor: Gajda, Marcin, 68-219 Tuplice (PL); Szajna, Tomasz, 66-004 Drzonkow (PL)
(74) Representative: Pawlowski, Adam

(57) **Abstract**

A method for assisting a user of a terminal in constructing a search query for a content search engine, comprises the steps of collecting, in a history collection, descriptors of content presented at the terminal, receiving a request to construct the search query, selecting from the history collection a plurality of descriptors to form an assistance collection, presenting the assistance collection to the user and allowing the user to construct the search query from the descriptors of the assistance collection.

## Description

The present invention relates to a computer-implemented method for assisting a user in constructing a search query.

Vast amount of content available in computer networks, such as Internet, and other sources, such as television broadcasts or user local storage, requires efficient search mechanisms to find content of interest to a user. Various search engines have been developed, which monitor the network for new content, index it and provide an interface for users to find content of interest. One of the most commonly used search engine interfaces requires the user to construct a search query consisting of words and operators such as AND/OR or wildcards.

Constructing a search query requires the user to perform two main actions.

One is to select appropriate words, which will form an effective query, namely a query which will properly describe the content expected to be found by the search engine. The user must select the words with caution, since a query having too broad scope may return content outside of the user interest, while a narrowly formulated query may exclude relevant content. This may also require skills in a specific query language, which is often search-engine specific, and in defining content parameters.

The other action is to input the query to a terminal communicating with the search engine, such as a personal computer, a mobile terminal (such as a personal digital assistant or a mobile phone) or a home entertainment center or a digital television decoder connected to a television set. Entering text is easy for experienced computer users, acquainted with the use of a keyboard. Other text input methods have been developed for mobile terminals and television sets not equipped with a typical keyboard, but their use is often slow and not very convenient for a user to enter large amount of text.

Therefore, there exists a need to provide a method for assisting the user in constructing a search query, enabling construction of effective queries in a convenient way.

The object of the invention is a method for assisting a user of a terminal in constructing a search query for a content search engine, the method comprising the steps of collecting, in a history collection, descriptors of content presented at the terminal, receiving a request to construct the search query, selecting from the history collection a plurality of descriptors to form an assistance collection, presenting the assistance collection to the user and allowing the user to construct the search query from the descriptors of the assistance collection. By presenting the user with an assistance collection, construction of effective queries is possible for the user in a convenient way. The descriptors of the presented assistance collection are related to content already viewed by the user, which represent the content of most interest to the user. Therefore, the user wishing to find content of interest does not have to think of phrases that describe it in a best way, but is presented with them in the assistance collection automatically. By allowing the user to construct the search query using the assistance collection, the user does not have to enter the phrases manually, which simplifies the entry of the query. The effectiveness of query construction is higher than in a known methods, in which the user is presented with a history of previously entered queries. In case of the present invention, the descriptors collected from presented content can be more relevant to the content than descriptors entered into past queries by an inexperienced user, not acquainted with selection of appropriate words to form a query.

The method may further comprise the steps of collecting, in an external history collection, descriptors of content presented at a plurality of terminals and selecting from the external history collection a plurality of descriptors to form an assistance collection. Presenting the user with an assistance collection comprising descriptors from the external history collection further increases the effectiveness of query construction, as the user is presented with descriptors of content which he might have otherwise not viewed. Descriptors collected from other users, combined with user-own collected descriptors, may result in enabling construction of a more sophisticated query, leading to more effective search results.

The method may further comprise the step of collecting, in the history collection in addition to the descriptors, metadata identifying content presented at the terminal, including at least one of: content identifier, type, time of presentation, duration of presentation or rating. The additionally collected metadata allows forming different types of assistance collections, which may be customized for constructing search queries related to particular types of content or current user preferences.

The method may further comprise the step of allowing the user to select a descriptor from the assistance collection and inserting the selected descriptor to the search query. In case the assistance collection includes all words that the user believes are necessary to construct the query, the need to enter text is eliminated and the user constructs the query by simple phrase selection process.

The method may further comprise the step of, after inserting the selected descriptor to the search query, selecting from the history collection a plurality of descriptors to form a modified assistance collection and presenting the modified assistance collection. This allows customizing the presented assistance collection to current user search preferences. The modified assistance collection may include descriptors related to descriptors already inserted into the query, in order to define further details.

The object of the invention is also a computer program comprising software code adapted to perform the steps of the above-described method when executed on a data processing terminal, as well as a computer readable storage medium comprising the computer program.

A further object of the invention is a system for assisting a user of a terminal in constructing a search query for a content search engine, the system comprising a descriptors extractor configured to collect in a history collection descriptors of content presented at the terminal, and a query assistant configured to select from the history collection a plurality of descriptors to form an assistance collection, present the assistance collection to the user and allow the user to construct a search query from the descriptors of the assistance collection.

The system may further comprise a history aggregator configured to collect in an external history collection descriptors of content presented at a plurality of terminals, wherein the query assistant is further configured to select from the external history collection a plurality of descriptors to form an assistance collection.

The history collection comprises a predefined set of descriptors. This enables operation of the system for users who have just started to use it and have no own history collection yet or for users who rarely define search queries and wish to receive search term proposals.

The invention will now be described by way of an example and with reference to accompanying drawings, in which:
Fig. 1 presents a general architecture of the system according to the invention;
Fig. 2 presents a procedure of operation of a descriptor extractor;
Fig. 3 presents an exemplary structure of a history collection;
Fig. 4 presents a procedure of operation of a query assistant;
Fig. 5 presents an exemplary user interface screen for assisting the user in constructing a search query.

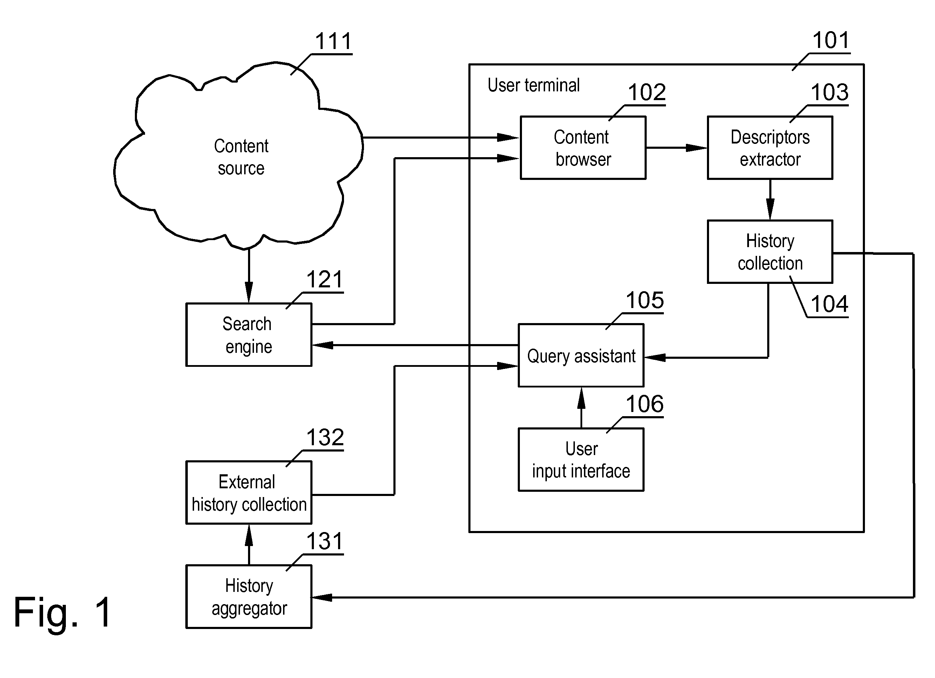

Fig. 1 presents a general architecture of the system according to the invention. The system comprises blocks 103, 104 and 105 operable to implement the method of assisting in constructing a search query. The system can be implemented in a user terminal 101, such as a personal computer, a mobile device, a home entertainment center or a digital television decoder, as software operable by the terminal or as one or more hardware elements. The software may be operable by a main or a dedicated processor of the terminal, and the history collection 104 may be stored in a non-volatile memory to store a data covering a longer period or in a volatile memory to store data related only to a present operating session. Alternatively, the system can be partially implemented in a user terminal 101 and partially in another terminal. For example, the user terminal may comprise only the descriptors extractor 103 and the history collection 104 and query assistant 105 can be operable by a network terminal serving a plurality of users. Alternatively, the system can be fully implemented outside the user terminal, in an external terminal serving a plurality of users, the terminal being accessible via a network, which has access to data on content directed to user terminals for presentation. In case the query assistant 105 is implemented in a network terminal, it can provide its functionality in a form of a network service accessible by the content browser 102 of the user terminal.

The user terminal comprises at least one content browser 102, such as an Internet web pages browser, a video or music player, a television channels display engine, an image browser, or a news aggregator. The content browser 102 receives content from at least one content source 111, such as the Internet, a video or audio programs database, a broadcast streaming, a photo bank or a news input.

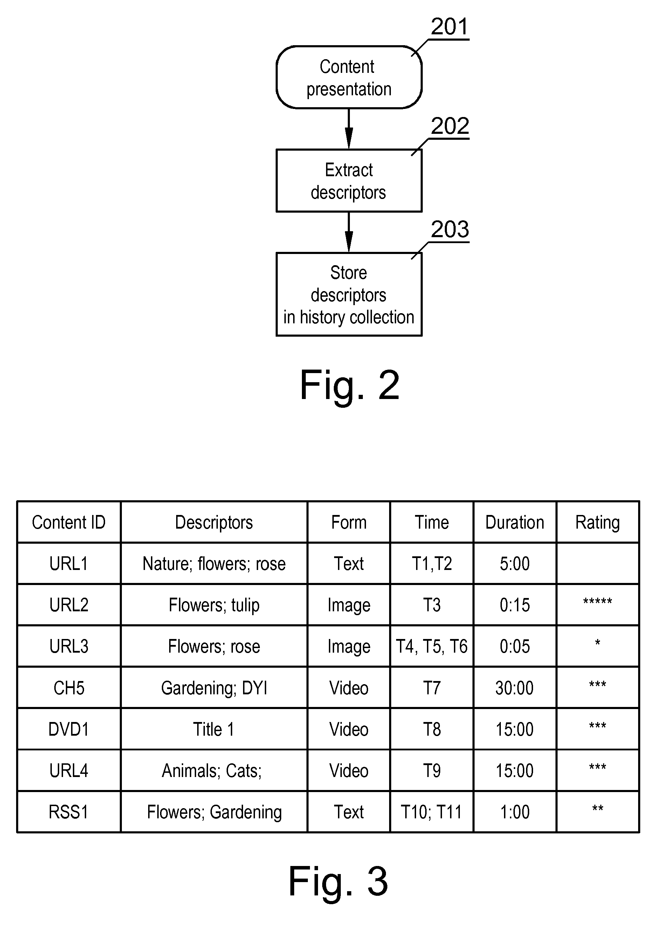

A descriptors extractor 103 is configured to collect descriptors of content presented at the terminal. It communicates with the content browser 102 and monitors the content browsed by the user, according to a procedure shown in fig. 2. It can be configured to receive data from the content browser after content is presented, or receive data on content directed to the terminal before it enters the content browser. When a particular content item, such as a web page, a video program, a music clip, a television program, a photo or a news item is viewed by the user, the descriptors extractor 103 analyses the content and extracts descriptors related to the content. For example, the descriptors extractor 103 may read content metadata, such as title, source, summary or descriptive tags. Extraction of tags may be particularly useful for Internet content, where many pages and individual items, such as graphic, video or audio files, have user-generated tags describing the content for easier identification. Extraction of titles may be particularly useful for broadcast television programs, which have embedded program information details. The descriptors extractor 103 may analyze not only the metadata of the content, but also the content itself. For example, in case of a text news item, the whole text can be analyzed in order to extract characteristic words or text fragments such as titles or names. In case of graphical items, a graphics processing module may be used to recognize shapes appearing on the image.

The content descriptors extracted by the descriptors extractor 103 are collected in a history collection 104, shown in details in fig. 3. The history collection stores information on content presented at the terminal, its descriptors and/or time of presentation. The collection may include an initial set of descriptors, to be used at a startup of the system, when the user has not viewed much content yet and the descriptors extractor has not collected data on content viewed by the user of the terminal. The collection can include general descriptors, related to topics of general interest, or may be matched to a profile of the user. For example, it can be matched to defined interests of the user, to age, gender, occupation, or geographical location, defined by the user profile.

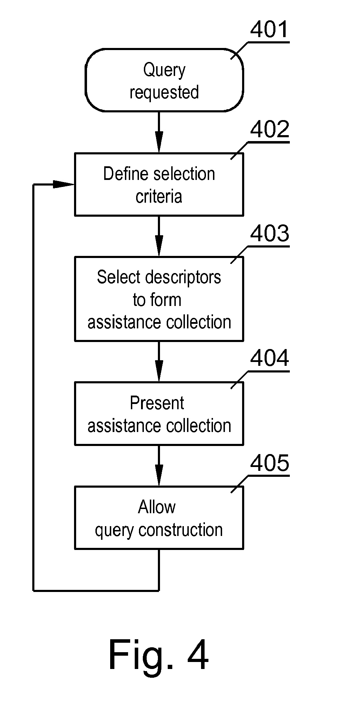

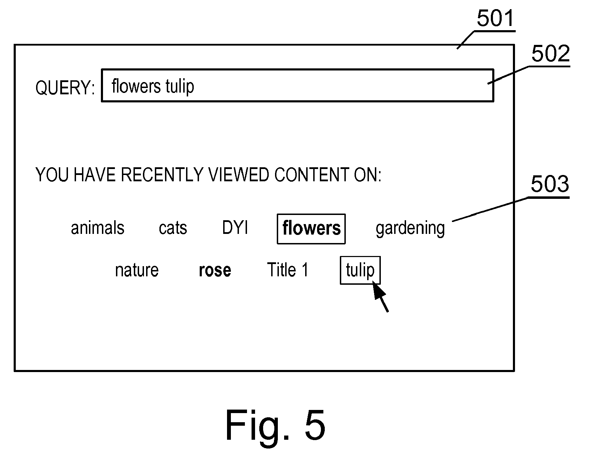

A query assistant 105 is configured to form an assistance collection of collected descriptors and present it to the user so as to allow the user to construct a search query from the presented descriptors. It operates according to a procedure shown in Fig. 4. When a search query is to be constructed, the query assistant analyses the history collection and selects a number of descriptors according to specific criteria, such as the most frequent or most recent descriptors. The descriptors are then presented to the user. The user, via the user interface 106, such as a keyboard, a mouse, a touchpad, a three-dimensional navigation device, is allowed to construct the search query from the descriptors of the assistance collection, as shown in Fig. 5.

The constructed query is next sent by the query assistant 105 to one or more search engines 121. The query assistant 105 can be configured to communicate with a predefined search engine 121, or with a search engine defined by the user when constructing the search query. Alternatively, the system can comprise a plurality of query assistants 105, each configured to assist in constructing a search query to be sent to a particular search engine. The search engine returns a list of content from the content sources 111 matching the received search query. The list can be returned in a form readable by the content browser 102.

The system can comprise a plurality of query assistants 105, each having a user interface configured to assist in constructing a search query related to particular type of content, for example a query assistant for graphical content (presenting tag descriptors), for television programs (presenting title-, actor- or director-related descriptors), for news items (presenting name-related descriptors), for music items (presenting theme-related descriptors).

The system can further comprise a history aggregator 131, configured to collect in an external history collection 132 descriptors of content presented at a plurality of terminals 101. This allows the query assistant 105 to form assistance collection comprising descriptors of most interest to a group of users. Such assistance collection can be helpful for a user who has just started to use the system and has no own history collection yet. Moreover, such assistance collection can be helpful for a user who is interested in searching for contents of interest to the general public or a specified group of users, for example photography enthusiasts having a common profile with the user. The external history collection 132 can further include information on user profile characteristics. In such a case, the query assistant 105 can form assistance collection from descriptors stored by other users having a profile similar to the user of the terminal.

Fig. 2 presents a procedure of operation of a descriptors extractor 103. The descriptors extractor is activated in step 201, when content is presented at the terminal, for example when a new web page, graphic file or television program is displayed, a video disc or music file is played or a news item is aggregated and presented to the user. The descriptors extractor may receive data from the content browser or may monitor data directed to the terminal before it enters the content browser. Then, the descriptors of the content are extracted in step 202, by analyzing the metadata of the content or the content itself. The descriptors extractor may be configured to use different descriptors extraction mechanisms for different types of content. For example, for content items having graphic form tags can be extracted, while for text items a full-text search can be performed to extract characteristic information, such as titles, people or place names, or most frequently appearing terms. The number of descriptors may be limited to a predetermined amount, for example 10 descriptors per content item. Next, in step 103, the descriptors are stored in the history collection, optionally with other metadata identifying the presented content, such as a content identifier, its type, time of display, duration of display, received rating. Next, the descriptors extractors waits for the content browser to present another content.

Fig. 3 presents an exemplary structure of a history collection. The history collection comprises data related to the descriptors and one or more additional metadata, such as a unique content identifier, content type, time of display, duration of display, received rating. The amount of additional metadata stored for a particular descriptor may be dependent on the type of content to which the descriptor relates, for example rating can be stored for images only.

The content identifier may have a form of an Universal Resource Locator (URL1-URL4), specifying an address of an Internet page or a location of a file in a local storage, or other form such as a television channel identifier (CH5), a video disc identifier (DVD1), depending on the type of content. The content identifier is useful to indicate on the search results list the content already viewed by the user. It is also useful to group descriptors related to the same content presented a number of times.

The type field describes the type of the content, such as a text type, image, audio or video type. The type field is particularly useful while constructing a search query related to content of particular type, when only descriptors related to that type of presented content are presented to the user.

The time field specifies the time at which the content was presented to the user. This may be useful for increasing the importance of a particular descriptors. For example, when forming the assistance collection, priority may be given to descriptors appearing most frequently or most recently.

The duration field specifies the total duration of presentation of the particular content item. When forming the assistance collection, priority may be given to descriptors related to content presented for longer time.

The rating field specifies the rating of the content read from the content metadata or received from the user during presentation of the content. When forming the assistance collection, priority may be given to descriptors related to content having higher rating.

The descriptors may be further categorized into groups such as tags, titles, people names, place names, GPS coordinates, music type, or most frequent terms appearing in content. The category of descriptors may be dependent on the type of content, for example music type can be stored for audio and video clips only, while GPS coordinates may be stored only for images and news items.

The history collection has been presented in Fig. 3 in a form of a table. Alternatively, it can be stored in other type of data container.

In a particular embodiment, the history collection may store only the descriptors of presented content, without reference to the content identifier. Such collection may have a form of a simple list, comprising only a number of descriptors. Such list may be used by the query assistant to present the user with most recent or most frequently appearing descriptors of content presented at the terminal.

Fig. 4 presents a procedure of operation of a query assistant. The query assistant operation is started in step 401 upon received request for construction of a query. The query assistant may operate as a stand-alone application executable directly by the user or as a plug-in to a collection browser, executable upon entering an address of a particular search engine. In step 402 the query assistant determines selection criteria for selecting descriptors from the history collection to form an assistance collection. The selection criteria may be selected by the user or may be determined depending on the type of selected search engine (for example, image search engine, television programming search, news search). The following selection criteria are particularly useful:
- most recent descriptors - useful for selecting descriptors related to content most recently presented to the user. Such criteria allow the user to simplify the search when continuing a previously terminated search or wishing to find recent items of interest;
- most frequently appearing descriptors - useful for selecting descriptors related to content being of highest importance for the user. Such criteria may be limited to a particular period of time, such as the past week or month;
- descriptors limited to content of particular form - useful for selecting descriptors related only to images, television programs, music clips or news items;
- descriptors having the highest rating - useful to simplify search for content mostly appreciated by the user;

Other criteria, including searching through other fields of the history collection, or their combination, are also possible.

In step 403, according to the selection criteria, a number of descriptors is selected from the history collection to form an assistance collection. The number of descriptors may be predefined, for example limited to 10 descriptors.

The assistance collection is presented to the user in step 404. The assistance collection can be presented in a form such as a list, a cloud, a tree or similar. The form may be structured, for example arranged alphabetically or by relevance to selection criteria.

In step 405 the user is allowed to construct a query from the presented assistance collection. For example, the user can be allowed to drag and drop items from the collection to a query construction window. Alternatively, the user may be allowed to point to particular items to be copied to the query construction window. The user may be also allowed to manually enter other descriptors to the query construction window, in order not to limit the search query to already-presented items.

After a user has selected a descriptor from the assistance collection to be included in the constructed search query, the procedure can return to step 402 to modify selection criteria. For example, the initial selection criteria may specify descriptors of the most recently presented content. However, the descriptors may relate to various topics. Once a particular descriptor is selected, the selection criteria may be modified to present descriptors related to the selected one, such as descriptors of content items having the selected descriptor in common, or descriptors of contents having the same form as the selected descriptor.

Fig. 5 presents an exemplary user interface screen 501 for assisting the user in constructing a search query. The screen 501 comprises a query construction window 502, in which the user enters phrases to build a search query. The user may enter the phrases manually, using a keyboard or other text input device. In addition, the user is allowed to construct the query from descriptors of the assistance collection 503 presented on the screen 501. For example, the user may point with a cursor to a particular phrase to cause it to be copied to the query construction window 502, or drag-and-drop it to the query construction window 502. Alternatively, an interface may be provided allowing selection of a descriptor from the assistance collection by arrows of a keyboard or by other navigation device, such as a scrolling wheel, allowing navigation between individual descriptors. The assistance collection 503 may be presented in form of a cloud, arranged alphabetically, in which elements most relevant to the selection criteria are additionally marked, for example by larger or bold font. The assistance collection 503 represents a collection created on the basis of history collection shown in Fig. 3, with selection criteria specifying that the most frequently appearing descriptors should be selected.

## Claims

1. A method for assisting a user of a terminal in constructing a search query for a content search engine, the method comprising the steps of:
- collecting, in a history collection, descriptors of content presented at the terminal;
- receiving a request to construct the search query;
- selecting from the history collection a plurality of descriptors to form an assistance collection;
- presenting the assistance collection to the user; and
- allowing the user to construct the search query from the descriptors of the assistance collection

2. The method according to claim 1, further comprising the step of
- collecting, in an external history collection, descriptors of content presented at a plurality of terminals; and
- selecting from the external history collection a plurality of descriptors to form an assistance collection

3. The method according to claim 1, further comprising the step of
- collecting, in the history collection in addition to the descriptors, metadata identifying content presented at the terminal, including at least one of: content identifier, type, time of presentation, duration of presentation or rating.

4. The method according to claim 1, further comprising the step of
- allowing the user to select a descriptor from the assistance collection and inserting the selected descriptor to the search query

5. The method according to claim 4, further comprising the step of
- after inserting the selected descriptor to the search query, selecting from the history collection a plurality of descriptors to form a modified assistance collection and presenting the modified assistance collection.

6. A computer program comprising software code adapted to perform the steps of the method according to any of claims 1 to 5 when executed on a data processing terminal.

7. A computer readable storage medium comprising the computer program of claim 6.

8. A system for assisting a user of a terminal (101) in constructing a search query for a content search engine, the system comprising:
- a descriptors extractor (103) configured to collect in a history collection (104) descriptors of content presented at the terminal (101);
- a query assistant (105) configured to
- select from the history collection (104) a plurality of descriptors to form an assistance collection;
- present the assistance collection to the user; and
- allow the user to construct a search query from the descriptors of the assistance collection

9. The system according to claim 8, further comprising
- a history aggregator (131) configured to collect in an external history collection (132) descriptors of content presented at a plurality of terminals;
- wherein the query assistant (105) is further configured to select from the external history collection a plurality of descriptors to form an assistance collection.

10. The system according to claim 8, wherein
- the history collection (104) comprises a predefined set of descriptors.
